# EUROPEAN PATENT APPLICATION

(11) **EP 4 779 757 A1**
(43) Date of publication of application: **22.07.2026**
(21) Application number: 25151954.2
(22) Date of filing: 15.01.2025
(51) Int. Cl.: H01M 10/613, B60L 58/24, H01M 10/6555, H01M 10/658, H01M 50/291, H01M 50/242

(54) **BARRIER FOR A BATTERY APPARATUS**

(71) Applicant: Newfrey LLC, New Britain, CT 06053 (US)
(72) Inventor: Schneider, Elena, 35394 Giessen (DE); Wissling, Matthias, 35394 Giessen (DE); Han, Sangook, 35394 Giessen (DE); Will, Peter, 35394 Giessen (DE); Körke, Lukas, 35394 Giessen (DE); Mashhadi Gholamali, Behnam, 35394 Giessen (DE)
(74) Representative: Witte, Weller & Partner Patentanwälte mbB

(57) **Abstract**

A barrier for preventing or delaying thermal propagation between battery pack subassemblies (10) and/or for accommodating volume changes of battery pack subassemblies, the barrier comprising: a spacer arrangement (24) arranged between the first and second barrier plates (20,22) in a thickness direction and comprising (i) a first plurality of deformable spacer portions (P1) which are configured to extend between opposing surfaces (21, 23) and provide a first deformation characteristic when the opposing surfaces (21, 23) are moved towards each other, and (ii) a second plurality of deformable spacer portions (P2) which are configured to extend between the opposing surfaces (21, 23) and provide a second deformation characteristic when the opposing surfaces (21, 23) are moved towards each other, wherein the second deformation characteristic is different from the first deformation characteristic.

## Description

The present invention relates to a barrier for a battery apparatus configured to prevent thermal propagation between battery pack subassemblies and/or to accommodate volume changes of battery pack subassemblies and/or to provide thermal isolation.

The field to which the disclosure generally relates includes methods and assemblies for thermal management of the temperature of battery components and thermal safety features for limiting cell-to-cell thermal propagation within a battery. More particularly, but not exclusively, the invention can be used within a battery module having a number of electrically interconnected battery cells.

In the present context, the terms "battery cell", "battery module", "battery section", and "battery pack" (as well as their shortened variants "cell", "module", "section", and "pack") are used to describe different levels of components of an overall battery assembly. For example, numerous individual battery cells form the building blocks of battery modules. Multiple battery modules (in conjunction with ancillary equipment) in turn make up a battery pack.

For purposes of this application, a cell is the smallest unit of a battery pack that includes a single anode electrical connection and single cathode electrical connection on the exterior or a sealed housing that contains one or more pairs of anode and cathode elements. A cell is a single electrochemical unit, whereas a battery is made up of one or more electrically interconnected cells joined in series, parallel or both, depending on desired output voltage, current or capacity.

A battery apparatus may include one or more battery packs suitably sized to provide electrical power to the vehicle. Battery packs are made up of battery sections which may be made up of numerous battery modules each of which is in turn made up of one or more battery cells that deliver electrical current to a load. The battery cells are electrically interconnected.

Battery packs are made up of sections which may be made up of numerous battery modules each of which is in turn made up of one or more battery cells that deliver electrical current to a load. The number of battery cells within the larger battery module, section, pack, or related structure will be appreciated by those skilled in the art to coincide with the power needs of the device receiving electric current from the battery, as well as the thermal operating requirements of the cells within the battery. In such batteries, current flow, both charge and discharge, generates heat inside the cells and in their interconnection systems.

Electric Vehicles (EVs) use lithium-ion batteries comprised of cells. The performance of a lithium-ion battery cell is very dependent on its temperature. When overheated, the cells can experience degraded electrical performance, damage, and reduced lifespan. Thus, lithium-ion batteries require thermal management systems to maintain a constant temperature with very low temperature deviations (the temperature distribution over a cell should be uniform with a maximum deviation of less than 5°C) so that they can operate efficiently without damages or failures.

Additionally, lithium-ion batteries may experience a failure called thermal runaway. The term thermal runaway event refers to an uncontrolled increase in temperature in a battery system. Thermal runaway is a chain reaction within a battery cell that can be very difficult to stop once it has started. It occurs when the temperature inside a battery reaches the point that causes a chemical reaction to occur inside the battery. This chemical reaction produces even more heat, which drives the temperature higher, causing further chemical reactions that create more heat. During a thermal runaway event, the generation of heat within a battery system or a battery cell exceeds the dissipation of heat, thus leading to a further increase in temperature. A thermal runaway event may be triggered by various conditions, including a short circuit within the cell, improper cell use, physical abuse, manufacturing defects, or exposure of the cell to extreme external temperatures.

One of the important issues in the construction of an electric vehicle is the thermal management and thermal safety systems of the battery (notably lithium-ion batteries have been widely used in electric vehicles).

Thermal management is essential for the performance and operating life of electric vehicle batteries and several studies, disclosures, and patent documents deal with this issue.

In this application "thermal management" function and objective shall mean maintaining a battery and its individual subassemblies withing desired temperature limits (minimum and maximum) and within a desired variation (ΔT) band from one subassembly to another. "Thermal safety" function shall mean limiting heat propagation between battery subcomponents, in particular from cell to cell, with the objective of preventing a thermal runaway event.

In addition, the volume of the battery cells might change, depending on temperature, lifetime, whether they are being charged or not, etc. It is therefore advisable to accommodate some volume changes at least one battery pack subassembly within a housing.

A thermal isolation helps prevent thermal runaway and/or maintain an optimal temperature range within a battery sub-assembly by preventing external temperature fluctuations from affecting the battery cells, thereby ensuring consistent performance and/or protect the battery subassembly from external heat sources, thereby extending the battery's life and/or improve the efficiency and reliability of the battery subassembly.

JP2009163932 discloses a heat insulating cushioning member arranged between stacked battery cells. The heat insulating cushioning member is made of a sheet of polycarbonate resin or polypropylene resin and can be provided with grooves.

JP2020072005A is directed to a heat transfer suppressing sheet for batteries. JP2020072005A discloses an arrangement comprising two flat sheets made of a heat absorbing or insulating material and a corrugated sheet extending between the two flat sheets.

US2022013825 and US2014335398 disclose thermal barriers to prevent cell-to-cell thermal runaway propagation in battery systems with spacers provided on both sides of a thermal blocking sheet.

However, there is still a need to provide a barrier between two adjacent battery pack subassemblies, e.g. battery cells, or between battery cell and housing, directly or indirectly and/or with contact or without, which is lightweight, is easy to manufacture, has a compact design, has a high thermal resistance, and/or allows for volume changes of the battery pack subassemblies.

Accordingly, the present invention provides a barrier according to claim 1.

More particularly, the barrier is configured to prevent or delay thermal propagation between battery pack subassemblies and/or is configured to accommodate volume changes of battery pack subassemblies. The barrier has at least one spacer arrangement configured to be arranged between two opposing surfaces in a thickness direction. The spacer arrangement comprises a first plurality of deformable spacer portions which are configured to extend between the opposing surfaces and provide a first deformation characteristic when the opposing surfaces are moved towards each other, and a second plurality of deformable spacer portions which are configured to extend between the opposing surfaces and provide a second deformation characteristic when the opposing surfaces are moved towards each other. The second deformation characteristic is different from the first deformation characteristic.

The spacer portions are deformable in the thickness direction. The spacer portions are preferably deformable in an elastic manner. The first and second pluralities of spacer portions preferably extend in the thickness direction between the opposing surfaces.

The barrier combines deformable spacer portions having different deformation characteristics so as to optimize compression, improve thermal isolation performance, and/or reduce the use of elastic material for optimizing costs.

The battery pack subassembly may be a cell or a cell stack in which cells are connected serially or parallelly.

The opposing surfaces between which the spacer arrangement is to be arranged, may be two opposing surfaces of two battery pack subassemblies. In an alternative, the opposing surfaces may include one surface which belongs to a battery pack subassembly, and another surface which belongs to a housing in which the battery pack subassemblies are situated. For example, the barrier can be positioned between two battery cells or between one or several battery cells and a wall of a housing, with or even potentially without direct contact with the battery cells.

The first plurality of deformable spacer portions and the second plurality of deformable spacer portions may be arranged between the opposing surfaces in a parallel manner or in a serial/stacked manner. Both alternatives can be combined with each other.

In the parallel embodiment, either one of the first and second spacer portions may contact the opposing surfaces after a battery pack is finally assembled, while others of the first and second spacer portions may or may not contact the opposing surfaces at this stage. When the opposing surfaces are moved towards each other, for example due to volume changes of battery pack subassemblies on account of aging, temperature, etc., the overall deformation characteristic may have two stages. In a first stage, only the initially contacting spacer portions are elastically deformed while the other (non-contacting) spacer portions are not deformed. In a second stage of the overall deformation, both types of spacer portions are deformed simultaneously.

For example, in some embodiments such spacer arrangement may serve as a good compensator at lower forces in the begin of life cycle of battery cells. On the other hand, towards the end of life, the forces within the battery cell may increase. In order to achieve an improved load distribution on the battery casing walls, the second phase of deformation can be suitable to compensate these forces.

In the serial embodiment, the first and second spacer portions may be stacked on top of each other in the thickness direction. In this case, it is preferred if the combination of such spacer portions contact the opposing surfaces from the beginning (at the beginning of life of a battery pack). Even in this serial embodiment, the overall compression performance may be improved. Particularly, the use of elastic material may be reduced, for optimizing costs.

Overall, a compression-load-curve may be improved.

The object is achieved in full.

In a preferred embodiment, the barrier comprises a first barrier plate and a second barrier plate, wherein the first and second barrier plates comprise respective internal surfaces which face to each other, and external surfaces, opposite to the respective internal surfaces.

The barrier plate can be combined with the spacer arrangement, for example at opposing ends in the thickness direction of the spacer arrangement.

Particularly, it is preferred if the internal surfaces of the barrier plates form the opposing surfaces between which the first and second pluralities of deformable spacer portions are configured to extend.

The barrier plates, preferably, are not deformable in the thickness direction, or are at least less deformable in the thickness direction than the deformable spacer portions.

Further, it is preferred overall if the spacer arrangement comprises at least one intermediate plate having a first intermediate plate surface which is configured to face one of the opposing surfaces, and a second intermediate plate surface which is configured to face the other of the opposing surfaces, wherein at least one of the first and second pluralities of spacer portions are arranged at the intermediate plate.

Here, the intermediate plate may serve as a carrier element for at least one of the first and second pluralities of spacer portions and may serve to provide a certain rigidity of the spacer arrangement. The intermediate plate, preferably, is not or at least less deformable in the thickness direction than the first and second pluralities of spacer portions.

In a preferred embodiment, at least one of the first and second pluralities of spacer portions includes first spacers extending from the first intermediate plate surface, and wherein at least one of the first and second pluralities of spacer portions includes second spacers extending from the second intermediate plate surface.

In one variant, the first spacers are formed by only one of the first and second plurality of spacer portions, in which case the second spacers are exclusively formed by the other of the first and second pluralities of spacer portions.

In a preferred embodiment, the first plurality of spacer portions may include first spacers and second spacers, and the second pluralitiy of spacer portions may also include first and second spacers.

In this embodiment, the first spacers may be connected to the second spacers via the intermediate plate, particularly through the intermediate plate.

In a preferred embodiment, the barrier includes a first and a second barrier plate and an intermediate plate at which the first and second plurality of spacer portions are arranged.

In this embodiment, the at least three plates (first and second barrier plates plus intermediate plate) with the first and second plurality of spacers between two battery cells preferably provide a minimum of thickness and air gaps between the cells without increasing the size of the gap between the two cells. The different interfaces and the air gaps delimited by the pluralities of spacer portions help significantly reduce the heat transfer. The first barrier plate is destined to be adjacent to a first battery cell, the second barrier plate is destined to be adjacent to a housing or to a second battery cell.

Preferably, at least one of the first and second barrier plates is made of mica or fiber glass material.

Further, it is preferred if the at least one intermediate plate is made of mica or fiber glass material.

The mica and fiberglass are lightweight materials and allow a low thermal conductivity. More particularly, with these materials a thermal conductivity of about 0.05 W/mK or lower can be achieved. The fiberglass (or fiberglass) is a reinforced plastic using glass fibers. The fiberglass may also be a composite material made from fine fibers of glass that are embedded in a resin matrix.

In an embodiment, the first plurality of spacer portions and/or the second plurality of spacer portions is made of an elastic material such as silicone or polyurethane material or PET. These materials have good elasticity and flexibility properties. Thus, the first and second plurality of spacer portions allow a swelling compensation, due to their elastic deformation characteristics. During charging of a battery cell, for example of a battery cell of lithium-ion type, swelling of the casing of the battery cell may occur. In the case of a cell of prismatic format (also called prismatic cell), swelling occurs essentially on the two lateral planar opposite faces which are the biggest faces of the casing. This swelling is amplified while the state of charge of the battery cell moves closer to the completely charged state. As the cells are joined behind each other in the housing and each cell experiences an increase in its thickness, a notable increase in the total length of the battery is seen, resulting from the sum of the increases in thicknesses of the cells. Because the housing is generally constituted by a rigid material and the gap between the cells and the walls of the housing is limited, swelling of the cells subjects the walls of the housing to pressure forces which may lead to its irreversible deformation, or a premature aging of the cells, or even to the battery being damaged. As a consequence, the use of elastic materials or system preventing the housing from deforming under the effect of the swelling of the cells during their charge is advantageous.

In general, it is preferred if the first deformation characteristic and the second deformation characteristic differ from each other on account of
- different hardnesses of the first and second pluralities of spacer portions, and/or
- different thicknesses of the first and second pluralities of spacer portions, and/or
- different areas of the first and second pluralities of spacer portions as seen in a cross-section perpendicular to the thickness direction, and/or
- different areas of the first and second pluralities of spacer portions as seen in a cross-section parallel to the thickness direction, and/or
- different shapes of the first and second pluralities of spacer portions as seen in a cross-section perpendicular to the thickness direction, and/or
- different shapes of the first and second pluralities of spacer portions as seen in a cross-section parallel to the thickness direction.

In another preferred embodiment, the first plurality of spacers extending from the first intermediate plate side of the intermediate plate and/or the second plurality of spacers extending from the second intermediate plate side of the intermediate plate includes a web pattern, particularly a honeycomb pattern.

The use of a web pattern may improve load distribution on the respective one of the opposing surfaces. Due to the enlarged air-gap volume, the thermal resistance of the spacer arrangement per cell-side area is increased. Also, due to the lower consumption of elastic material, costs are decreased.

The first plurality of spacers and/or the second plurality of spacers may include the web pattern which may be formed by one of the first and second pluralities of spacer portions. On the other hand, the first spacers and the second spacers may also include other spacer portions, either in a configuration parallel to the web pattern (e.g. project from within cells of the web pattern) or in a serial/stacked configuration (projecting in the thickness direction beyond an outer surface of the web pattern).

The intermediate plate, preferably, comprises through holes through which the first spacers are connected to the second spacers.

The holes may be formed as pores or may be formed by a certain permeability of the intermediate plate.

In a preferred embodiment, at least some of the holes in the intermediate plate are located at connections of cell sides of at least two adjacent cells of the web pattern, particularly of cell sides or webs of at least two adjacent polygonal cells of the honeycomb pattern.

In an embodiment, the first spacers define a first plurality of air gaps between the intermediate plate and the first barrier plate, and wherein the second spacers define a second plurality of air gaps between the intermediate plate and the second barrier plate. The air gaps are defined by the spacers. In other words, each air gap preferably is delimited by lateral walls, the lateral walls (e.g. of the web-like pattern) forming the spacers.

In an embodiment, the thermal barrier comprises up to ten (10) intermediate plates and a plurality of spacers which extend between two adjacent intermediate plates. The thermal barrier can be easily adapted depending on the size, thermal propagation needs, .....

In an embodiment, the thermal barrier forms an entity satisfying the following condition: weight per unit area < 20g/cm², and density < 200 g/cm³. This ensures that the thermal barrier does not increase substantially the weight of a battery sub-assembly.

In an embodiment, the thermal barrier comprises three intermediate plates, a plurality of spacers extending between two adjacent intermediate plates.

In an embodiment, the spacer arrangement comprises a first intermediate plate, a second intermediate plate and a third intermediate plate, wherein a first plurality of spacers extends between the first intermediate plate and the first barrier plate, wherein a second plurality of spacers extends between the first intermediate plate and the second intermediate plate, wherein a third plurality of spacers extends between the second and the third intermediate plate, and wherein a fourth plurality of spacers extends between the third intermediate plate and the second barrier plate.

In an embodiment, the first intermediate plate comprises at least one through hole, and the first plurality of spacers communicates with the second plurality of spacers, and/or wherein the third intermediate plate comprises at least one through hole, and the third plurality of spacers communicates with the fourth plurality of spacers. In an embodiment, the first and third intermediate plates are made in porous materials enabling contact between the pluralities of spacers extending from the opposite surfaces of the intermediate plates.

In an embodiment, the first and/or the second barrier plate and/or the intermediate plate is between 0.1 and 1.0 mm thick. In an embodiment, each spacer is between 0.3 and 4.8 mm thick. The thickness of the plates and spacer allow stacking several layers without increasing the size of the thermal barrier.

In an embodiment, the spacers are thicker than the first and/or the second barrier plate and/ or the intermediate plate. This guarantees a correct volume of the air gaps between the plates. The plates stabilize the assembly.

In an embodiment, the first plurality of spacers extends on the first surface of the intermediate plate in an area which represents between 10 and 30 % of the total area of the first surface of the intermediate plate.

In an embodiment, each spacer of the plurality of spacers comprises a base and a top, whereas the base area is greater than the top area.

The present disclosure is also directed to a thermal barrier comprising a first and a second barrier plate and a plurality of spacers extending between the first and the second barrier plates.

In another preferred embodiment, at least one of the first plurality of deformable spacer portions and the second plurality of deformable spacer portions are arranged in an area orthogonal to the thickness direction such that they are distributed in a line configuration along alternating lines or in a checkered configuration.

In another preferred embodiment, which may employ an intermediate plate or not, the first plurality of spacer portions and/or the second plurality of spacer portions forms a web pattern, particularly a honeycomb pattern.

This is to be understood broadly. Any grid-like pattern of polygonal or circular or elliptical cells is understood to form a web pattern.

In any case, the web pattern allows to increase the air-gap volume, as described above.

Particularly, it is preferred if the second plurality of spacer portions forms a web pattern, particularly a honeycomb pattern, so as to form a web-like layer, and wherein the first plurality of spacer portions is distributed over and connected to the web-like layer so as to protrude from at least one surface of the web-like layer.

This embodiment is particularly useful in the serial/stacked configuration, in which first spacer portions are arranged on top of the web-like layer, so as to protrude therefrom. This allows to use the first spacer portions as a good compensator at lower forces in the begin of lifecycle of battery cells. Due to the smaller contact surface, the compression will be higher compared to a simple one-height honeycomb structure. Toward the end of life, the forces within the battery cell increase. To achieve better load distribution on the battery casing walls, the web-like layer (e.g. the honeycomb pattern) with lower height will compensate for these forces.

In general, it is possible to arrange the first plurality of spacer portions simply on top of designated portions of the web-like layer, either in an alternating line configuration or in a checkered grid-like configuration.

On the other hand, it is preferred if the first plurality of spacer portions is connected to the web-like layer in a positively locking manner.

In this respect, the web-like layer may include holes into which material of the first spacer portions intrudes. In other cases, the first spacer portions may be formed so as to be wrapped around cell sides/webs of the web-like layer.

Preferably, if an intermediate plate is used, the second plurality of spacer portions, which form a web-like layer on each of the sides of the intermediate plate, may be connected to each other via holes in the intermediate plate.

In this case, it is preferred if the first plurality of spacer portions is essentially arranged on top of the web-like layer.

Therefore, it is overall preferred if the first plurality of spacer portions either (i) each form a honeycomb pattern which is preferably arranged on top of a designated portion of at least one of the surfaces of the web-like layer, or (ii) each form a singular protrusion projecting from at least one of the surfaces of the web-like layer.

In the latter case, it is preferred if the singular protrusions are located at connections of cell sides of at least two, preferably three adjacent cells of the web-like layer.

In this case, it is particularly preferred if the number of connections of cell sides of the web-like layer, at which singular protrusions are located, is in a range from 20 % to 100 %. In other words, the singular protrusions may be sparsely distributed over the area of the web-like layer or may be arranged in a dense manner.

Further, it is preferred if the cells of the web pattern have identical sizes throughout the entire area thereof or have sizes which are adapted to loads which may vary over the area of the web pattern.

Further, it is preferred if the first and/or the second barrier plate and/or the intermediate plate is between 100 and 1000 µm thick.

The invention and its advantages will be better understood from the reading of the following description, given by way of example only and with reference to the accompanying drawings, of which:
Fig. 1 shows schematically a first battery cell, a second battery cell, a thermal barrier according to the invention arranged between the first and the second battery cells and a bottom plate;
Fig. 2 shows a schematical cross-section view of a first embodiment of a thermal barrier according to the invention with a spacer arrangement, a first barrier plate, a second barrier plate, a first plurality of spacers extending from a first surface of the intermediate plate and a second plurality of spacers extending from a second surface of the intermediate plate, wherein the first plurality of spacers is aligned with regard to the second plurality of spacers;
Fig. 3 shows a schematical cross-section of a spacer arrangement of a thermal barrier according to a second embodiment comprising an intermediate plate, a first plurality of spacers extending from a first surface of the intermediate plate and a second plurality of spacers extending from a second surface of the intermediate plate, wherein the first plurality of spacers is offset with regard to the second plurality of spacers;
Fig. 4 shows a schematical cross-section view of a third embodiment of a thermal barrier according to the invention, wherein the first plurality of spacers is connected to the second plurality of spacers;
Fig. 5 shows a schematical cross-section view of a fourth embodiment of a thermal barrier according to the invention with three intermediate plates;
Fig. 6 shows a schematical cross-section view of a fifth embodiment of a thermal barrier according to the invention with three intermediate plates;
Fig. 7 shows a possible embodiment of a thermal barrier according to the present disclosure;
Fig. 8 is a perspective view of a spacer arrangement according to the invention;
Fig. 9 is a top view of the spacer arrangement of Fig. 8;
Fig. 10 is a cross-sectional side view of spacer arrangement of Fig. 8;
Fig. 11 is a view of detail XI of Fig. 9;
Fig. 12 is a cross-sectional view of another embodiment of a barrier having a spacer arrangement with first and second pluralities of deformable spacer portions having different deformation characteristics between two barrier plates;
Fig. 13 is another embodiment of a barrier having a spacer arrangement with first and second pluralities of deformable spacer portions having different deformation characteristics arranged on an intermediate plate between two barrier plates;
Fig. 14 is a sectional view XIV-XIV of Fig. 13 and shows two alternative configurations for arranging first and second spacer portions, e.g., either in a line configuration or in a checkered configuration;
Fig. 15 shows another embodiment of a barrier having a spacer arrangement with first and second deformable spacer portions having different deformation characteristics;
Fig. 16 is a diagram of the distance between opposing surfaces and the force generated by the elastic deformation of a spacer arrangement;
Fig. 17 is a schematic perspective view of another embodiment of a spacer arrangement having web-like layers on opposite sides of an intermediate plate, and web-like spacer portions arranged on top of at least one of the web-like layers;
Fig. 18 is a perspective view of an embodiment of a spacer arrangement based on the embodiment of Fig. 17 in a line configuration;
Fig. 19 is a perspective view of an embodiment of a spacer arrangement based on the embodiment of Fig. 17 in a checkered configuration;
Fig. 20 is a perspective view of another embodiment of a spacer arrangement including a web-like layer on top of an intermediate plate and singular protrusions projecting from an upper surface of the web-like layer;
Fig. 21 is another embodiment of a spacer arrangement which is similar to the embodiment of Fig. 20, however without an intermediate plate;
Fig. 22a is a detail XXII of Fig. 21;
Fig. 22b is a sectional view b-b of Fig. 22a;
Fig. 23 is a compression-force-diagram (CFD) of a load on a spacer arrangement versus its compression rate.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure. In addition, the steps of a method do not necessarily need to be executed in any specific order, or even sequentially, nor need the steps be executed only once, unless otherwise specified.

In some cases, well-known features, structures, or operations are not shown or described in detail. Furthermore, the described features, structures, or operations may be combined in any suitable manner in one or more embodiments. It will also be readily understood that the components of the embodiments, as generally described and illustrated in the figures herein, could be arranged and designed in a wide variety of different configurations.

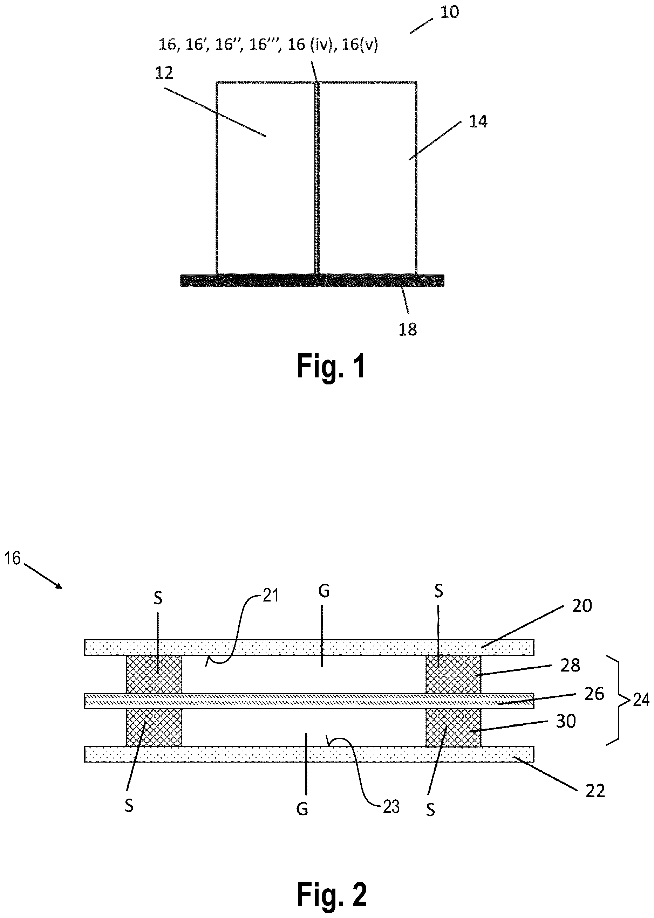

Fig. 1 shows an end view of a battery sub-assembly 10 comprising a first battery cell 12, a second battery cell 14, a thermal barrier 16, 16', 16", 16‴, 16 (iv), 16(v) and a bottom plate 18. The thermal barrier 16 is stacked between the first and the second battery cells 12, 14.

The thermal barrier 16 and the two battery cells 12, 14 may be disposed on the bottom plate 18. The thermal barrier 16, 16', 16", 16‴, 16 (iv), 16(v) may be glued to the first and second battery cells or fixed between the cells by compression for instance.

The first and second battery cells 12, 14 are for example prismatic cells or pouch cells or blade cells. More particularly, the battery cells are prismatic cells. The bottom plate 18 may be an aluminium plate adapted to transfer heat to a cooler or may directly be a cooler. The aluminium plate can have a thickness of about 10 micrometres (µm). In a known manner, the cooler can be sensibly flat and can comprise several layers, for example a thermal pad, a cold plate, a fluid channel transporting a coolant, ...

The first and second battery cells 12, 14 have each a main surface extending in a plane and the thermal barrier 16 can be in surface contact with the main surface of the first and second battery cells 12, 14.

Fig. 2 depicts a first embodiment of a thermal barrier 16. The thermal barrier 16 comprises a first and a second barrier plate 20, 22. A spacer arrangement 24 extends between the first and second barrier plates 20, 22. More particularly, the first and second barrier plates 20, 22 each comprises an internal surface 21, 23 facing the spacer arrangement 24 and an external surface opposite the spacer arrangement 24. The external surfaces of the first and second barrier plates may be electrically insulated. For instance, the first and second barrier plates 20, 22 may be made in an electrically insulated material which has a low thermal conductivity and is light in weight. Alternatively, or additionally, a coating may be provided on the first and/or second barrier plates. The external surfaces of the first and second barrier plates are destined to face respectively a first and a second battery cell, or a housing of the battery sub-assembly.

For instance, the first barrier plate 20 is made in a material with low thermal conductivity, and which is lightweight. For example, the first barrier plate is made in a paper material or in a material comprising or consisting of mica. More particularly, the first thermal barrier may be made at least partially in mica material.

The second barrier plate 22 is made in a material with low thermal conductivity, and which is lightweight. For instance, the second barrier plate 22 is made in a paper material or in a material comprising or consisting of mica. More particularly, the first thermal barrier is at least partially made in mica material.

The spacer arrangement 24 comprises for instance at least one intermediate plate 26 and a first plurality of spacers 28 extending between the first barrier plate 20 and the intermediate plate 26. The spacer arrangement 24 further comprises a second plurality of spacers 30 extending between the second barrier plate 22 and the intermediate plate 26. The first plurality of spacers 28 ensures a gap G between the first barrier plate 20 and the intermediate plate 26. The second plurality of spacers 30 ensures a gap G between the second barrier plate 22 and the intermediate plate 20.

The spacers S may be made with the same material than the barrier plates. Thus, the spacers may be made in a material comprising or consisting of mica. In a similar fashion, the intermediate plate may be with the same material than the barrier plates. Thus, the intermediate plate may be made in a material comprising or consisting of mica. However, other materials such as silicone, polyurethan, PET and/or fibreglass (or more generally a material comprising glass fibers) may also be used.

Preferably, the spacers are made in an elastic material exhibiting a certain degree of elasticity, allowing them to withstand deformation and recover their shape. The elasticity of the spacers enables a compensation to the effect of the swelling of the cells during their charge for example.

As represented in Fig. 2, and according to the first embodiment of the invention, the first plurality of spacers 28 may be aligned with the second plurality of spacers 30. In other words, a spacer S of the first plurality of spacers 28 is aligned with a spacer of the second plurality of spacers such that they extend along the same direction (orthogonal to the plane of the intermediate plate), the intermediate plate separating the two spacers. In other words, the spacers are arranged one above the other.

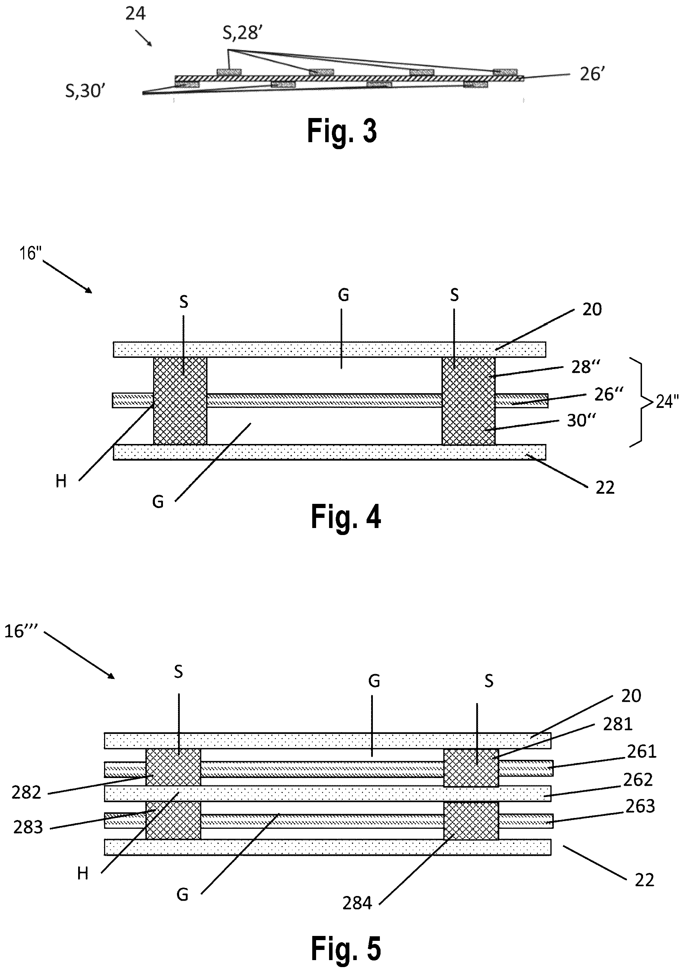

In a second embodiment, shown in Fig. 3, the spacer arrangement is such that the first plurality of spacers 28' is be offset with regard to the second plurality of spacers 30'. In other words, the first plurality of spacers is not aligned with the second plurality of spacers. The intermediate plate 26' extends between the first and the second plurality of spacers 28', 30'. The spacers preferably are arranged one above the other.

In a third embodiment, visible in Fig. 4, the thermal barrier 16" depicted is substantially similar to the thermal barrier 18 of Fig. 2, except that the first plurality of spacers 28" is connected to the second plurality of spacers 30". For instance, the intermediate plate 26" may be made of mica and provided with at least one hole H, and the first plurality of spacers 28" is connected to or in contact with the second plurality of spacers 30" through the through hole H. More particularly, a plurality of holes can be provided and enables the plurality of spacers to be fixed to the intermediate plate without the additional use of adhesive. In an alternative or additional embodiment, the intermediate plate may be made in a material having a porous or permeable structure which allows the material of the first and second plurality of spacers to pass through the intermediate plate, such that the first plurality of spacers contact the second plurality of spacers. The intermediate plate 26" is thus sort of embedded through the first and second plurality of spacers. A fibreglass material for instance presents such inherent property. More generally, the intermediate plate may be made in a permeable or porous material enabling the material of the plurality of spacers to pass through it.

The first and second plurality of spacers may be thus integrally made or have a material continuity. The spacers are for instance made of silicone or polyurethan or PTE. Such design allows the fixation of the spacers with regard to the intermediate plate without using glue or adhesive and without any risk of a plurality of spacers slipping off the intermediate plate.

In a fourth embodiment, depicted in Fig. 5, the thermal barrier 16‴ comprises the first barrier plate 20, the second barrier plate 22 and three intermediate plates 261, 262, 263. The first barrier plate 20, the second barrier plate 22 and the second intermediate plate 262 may be made for instance in the same material. The first barrier plate, the second barrier plate and the second intermediate plate 262 may be made for instance in mica material. The second intermediate plate 262 extends between the first intermediate plate 261 and the third intermediate plate 263.

A first plurality of spacers 281 extends between the first barrier plate 20 and the first intermediate plate 261. A second plurality of spacers 282 extends between the second intermediate plate 262 and the first intermediate plate 261. For instance, as shown in Fig. 5, the first and the second plurality of spacers are connected together or in contact through holes in the first intermediate plate or through the inherent property of the first intermediate plate material allowing material communication through it. A third plurality of spacers 283 extends between the second intermediate plate 262 and the third intermediate plate 263. Finally, a fourth plurality of spacers 284 extends between the third intermediate plate 263 and the second barrier plate 22. The fourth and third plurality of spacers are connected or in contact, in a similar way than the first and second plurality of spacers. The second and third plurality of spacers are not directly connected to or in contact with each other. The second intermediate plate 262 extends between the second and the third plurality of spacers and prevent a contact between said spacers. The first and third intermediate plates 261, 263 may be made of mica or fibreglass material (or more generally a material comprising glass fibres). The spacers S are for instance made of silicone or polyurethan or PTE.

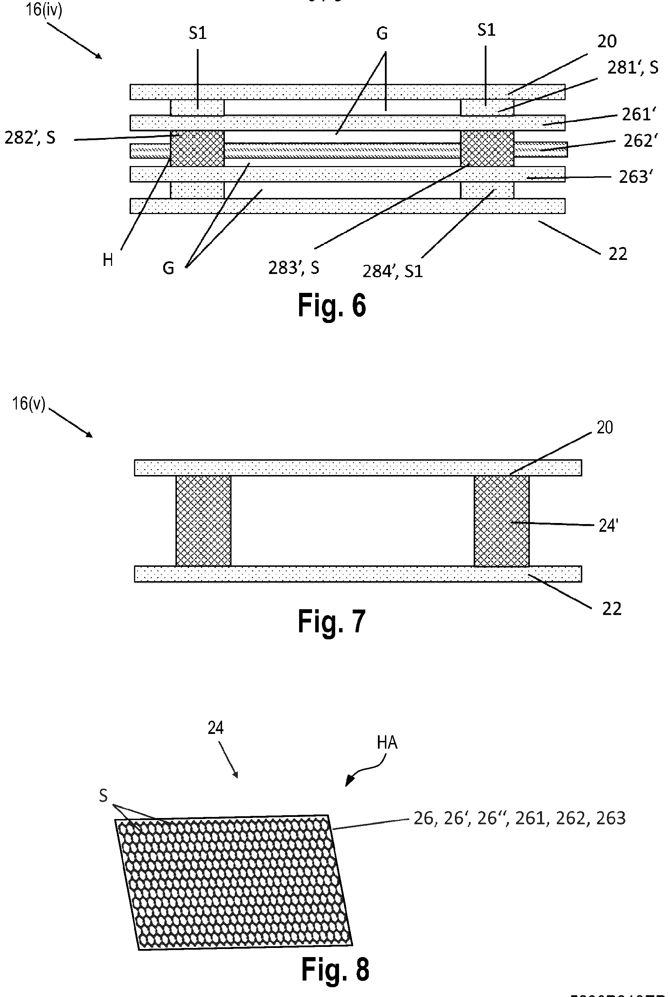

In a fifth embodiment, represented in Fig. 6, the thermal barrier 16 (iv) comprises the first barrier plate 20, the second barrier plate 22, a first intermediate plate 261', a second intermediate plate 262' and a third intermediate plate 263'. Between each plate, a plurality of spacers 281', 282', 283', 284' extends. More particularly, a first plurality of spacers 281' extends between the first barrier plate 20 and the first intermediate plate 261'. A second plurality of spacers 282' extends between the first and the second intermediate plate 261', 262'. A third plurality of spacers 283' extends between the second intermediate plate 262' and the third intermediate plate 263'. For instance, the second and third plurality of spacers 282', 283' are connected or are integrally made, in a way substantially similar to the one disclosed in relation to Fig. 4 and 5. The second intermediate plate 262' may be either provided with holes or may be made in a material allowing the material of the second or third plurality of spacers 282', 283' to pass through it. Finally, a fourth plurality of spacers 284' extends between the third intermediate plate 263' and the second barrier plate 22. The first plurality of spacers and the fourth plurality of spacers are for instance made of spacer S1 in a first material, different than the material of the spacers S of the second and third plurality of spacers. For example, the first plurality of spacers and the fourth plurality of spacers are made of mica material or a material similar to the one used for the barrier plates 20, 22.

The first plurality of spacers 281' and/or the fourth plurality of spacers 284' and/or the first barrier plate 20 and/or the first intermediate plate 261' and/or the third intermediate plate 263' and/or the second barrier plate 262' are for instance made of the same material. For instance, first plurality of spacers and/or the fourth plurality of spacers and/or the first barrier plate and/or the first intermediate plate and/or the third intermediate plate and/or the second barrier plate are made of mica material.

The second and third plurality of spacers 282', 283' may be made in an elastic material, as depicted above, such as silicone or polyurethan or PET material. The second intermediate plate 262' may be made of fibreglass or other porous or permeable material. In another embodiment, the second intermediate plate may be made in mica or may comprise a mica material.

In all the embodiments depicted above, the first and or second barrier plates 20, 22 may have a thickness between 0,1 and 0,5 mm. More particularly, the first and/or second barrier plates 20, 22 may have a thickness of 200 µm or 300 µm. Such thickness allows an electrical insulation sufficient for the battery cells to prevent electrical short circuit. The intermediate plates 26, 26', 26" may each have a thickness t2 between 10 and 1000 µm. For instance, the intermediate plates may each have the same thickness as the first or second barrier plates 20,22. The spacers S, S1 may each have a thickness t3 between 0.5 and 1.5 millimeters. For instance, the spacers may each have a thickness of about 1 mm. More particularly, the thickness of the spacers S preferably is greater than the thickness of the plates 20, 22, 26, 26', 26". The spacer arrangement may have a thickness t1 between 3 and 4.8 mm.

The thermal barrier 16 may present a total thickness of about 5 millimeters. The area of the thermal barrier 16 depends on the size of the battery cells, such that the greater outer surface of the battery cell can be covered by the thermal barrier 16. The thicknesses are measured along an axis orthogonal to the plane formed by the barrier or intermediate plates.

The spacers S, S1 can be strips, or cells. The spacers S can have a circular shape.

For instance, a plurality of spacers is formed by a web or a net, for instance a silicone or polyurethan or PTE web or net.

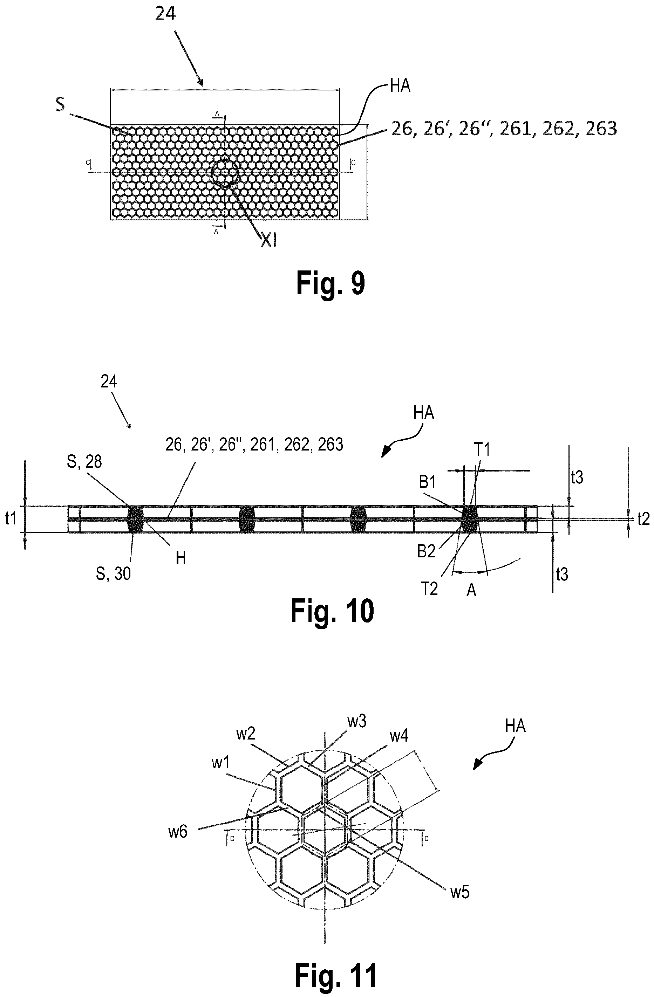

As visible in Fig. 8 and Fig. 9, a plurality of spacers S is formed by a plate or panel that has a design or structure resembling a honeycomb or a geometric arrangement HA of polygonal cells, for instance hexagonal cells, and forms a web-like layer. The cells are interconnected and form a repeating pattern that resembles a grid. Each cell has a plurality of sides/webs (for example six sides w1, w2, w3, w4, w5, w6, as represented in Fig. 11) and shares walls with neighbouring cells. The walls of the cells may have a constant thickness or not. The plate or panel forming the plurality of spacers S extends over a length and a width which corresponds to for instance to the area of the battery cells. The cells define gaps G which can form air gaps. Fig. 11 shows in more details the honeycomb pattern HA with the cells having six sides. A diameter of the cells is preferably in a range from 8 mm to 15 mm.

Such plate or panel having a structure resembling a honeycomb or a geometric arrangement of polygonal cells 24' may also be used, as visible in Fig. 7, between a first and a second barrier plate 20, 22, without any intermediate plate, to form a barrier 16(v).

Fig. 10 shows in greater details a possible embodiment of a spacer arrangement 24, as represented for instance in Fig. 4, with the first plurality of spacers S, 28 being in material communication with the second plurality of spacers S, 30 and an intermediate plate 26, 26', 26", 261, 262, 263 being either made of porous material or having holes H. The base B1 of a spacer of the first plurality of spacers contacts at least in part the base B2 of a spacer of the second plurality of spacers. The bases of the spacers are facing the intermediate plate. A top T1, T2 of the spacer, corresponding to the top of the spacer wall, is opposite the base B1, B2. The width of the base B1, B2 is greater than the width of the respective top T1, T2 such that the walls of the cells have a truncated cone shape in cross-section. The angle A at which the sides of the cone taper may be between 5 and 30 degrees. The top width of the spacer may be 10 to 60% smaller than the base width of the spacer. Preferably, the base width is in a range from 0.9 mm to 4.0 mm. Preferably, the top width is in a range from 0.5 mm to 0.9 mm. Preferably, the thickness t3 of the spacers is in a range from 0.9 mm to 4.0 mm. The bases of the first and/or second and/or third and/or fourth plurality of spacers occupy a total area corresponding to more than about 5 % and less than about 30% of the intermediate plate area.

The first plurality of spacers 28 can be similar or sensibly similar to the second plurality of spacers 30 (and/or to a possible third or fourth plurality of spacers). In another embodiment, the first plurality of spacers can have a shape different than the second plurality of spacers (and/or a possible third or fourth plurality of spacers).

As mentioned above, the plurality of spacers formed by a plate or panel that has a design or structure resembling a honeycomb or a geometric arrangement of polygonal cells is made in an elastic material. Such elastic material exhibits a certain degree of elasticity, allowing it to withstand deformation and recover its shape. Thus, the thermal barrier also ensures a swelling compensator function. For instance, the plurality of spacers formed by a plate or panel that has a design or structure resembling a honeycomb or a geometric arrangement of polygonal cells is made in silicones or silicone-based polymer. Another possible material is the polyurethan or the PET (Polyethylene Terephthalate).

Each of the barriers 16, 16", 16‴, 16 (iv), 16(v) as mentioned above may be electrically isolated from outside. It has a low weight. For instance, the thermal barrier presents a weight per unit area of equal to or less than 0.20g/cm², and more particularly of about 0.10 to 0.12 g/cm². The thermal conductivity of the thermal barrier 16 is in a range from about 0.0001 W/mK to 0.05 W/mK, e.g. about 0.001 W/mK.

Each of the barriers 16, 16, 16", 16‴, 16 (iv), 16(v) is destined to be used notably with prismatic battery cells.

In the following, further embodiments of barriers and spacer arrangements thereof are described, which correspond with respect to layout and function in general with the above embodiments. In the following, therefore, essentially the differences will be explained.

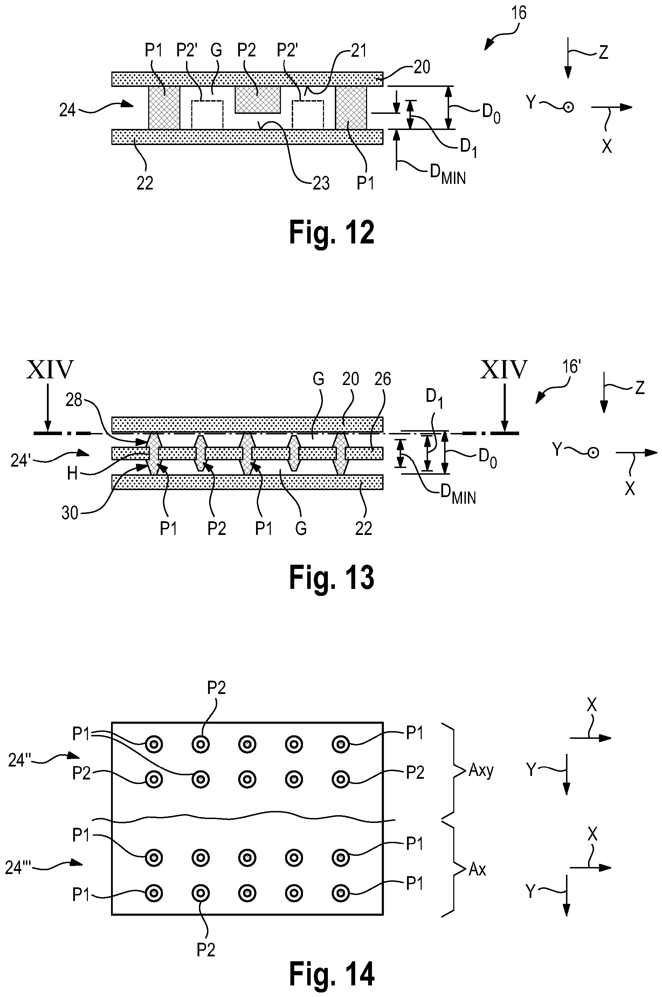

Fig. 12 shows a barrier 16 and a spacer arrangement 24, wherein the spacer arrangement 24 is arranged between the opposing surfaces 21, 23 of barrier plates 20, 22. The spacer arrangement 24 includes a first plurality of deformable spacer portions P1 which are configured to extend between the opposing surfaces 21, 23 and provide a first deformation characteristic when the opposing surfaces 21, 23 are moved towards each other. Each of the first plurality of deformable spacer portions P1 contacts both of the opposing surfaces 21, 23.

Further, the spacer arrangement 24 includes a second plurality of deformable spacer portions P2 which are configured to extend between the opposing surfaces 21, 23 and provide a second deformation characteristic when the opposing surfaces 21, 23 are moved towards each other.

In this embodiment, the second plurality of deformable spacer portions P2 contact only one 23 of the opposing surfaces 21, 23.

An initial distance between the opposing surfaces 21, 22 at the begin of life of a battery pack is shown at D₀.

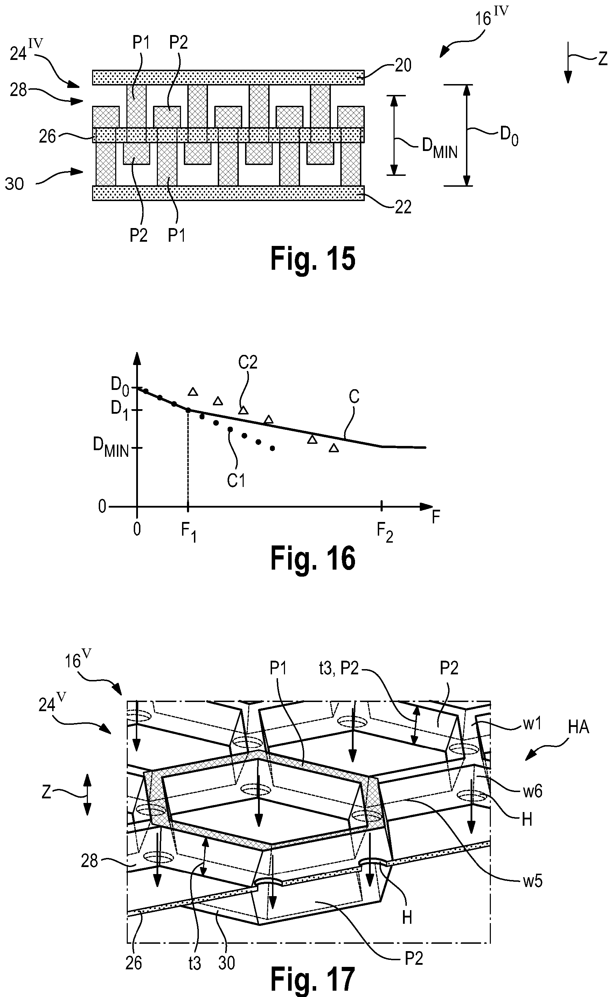

The first and second deformable spacer portions P1, P2 have different deformation characteristics, namely a first deformation characteristic C1 as shown in Fig. 16 and a second deformation characteristic C2 as shown in Fig. 16.

When the opposing surfaces 21, 23 as shown in Fig. 12 start to be moved towards each other by a corresponding force F, the overall deformation characteristic C of the spacer arrangement 24 is identical to the first deformation characteristic C1 of the first plurality of deformable spacer portions P1. As soon as a distance D₁ has been reached, in which the second plurality of deformable spacer portions P2 contact the surface 21, the overall characteristic C is formed by combining the first and second deformation characteristics C1 and C2, as shown in Fig. 16. The characteristics as shown in Fig. 16 are merely a schematic example in order to clarify that there are differences between the deformation characteristics of the first and second spacer portions P1, P2

Fig. 12 shows alternative or additional second spacer portions P2', which are attached to the other opposing surface 23 and not to the opposing surface 21.

Both in Fig. 12 and in Fig. 16, a minimum distance D_{MIN} of the two opposing surfaces 21, 23 is established by the spacer arrangement 24, as is shown in Fig. 16. Any additional force beyond a force F₂ does not lead to any further reduction of the distance between the opposing surfaces 21, 23.

In the following, embodiments are described which each have first and second pluralities of deformable spacer portions P1, P2 with different deformation characteristics C1, C2. Only differences of the respective embodiments with respect to the embodiment of Fig. 12 will be described.

In Fig. 13, the first and second deformable spacer portions P1, P2 of a barrier 16' are arranged at an intermediate plate 26. Also, in this case, the cross-section in a plane parallel to the thickness direction Z is formed conically on each of the size of the intermediate plate 26, like the spacers of Fig. 10. However, each of the first and second spacer portions P1, P2 may have a rectangular cross-section in an alternative.

In each of the embodiments of Figs. 12 and 13, gaps G are arranged between the first and second deformable spacer portions P1, P2 in a direction transverse to the thickness direction Z (direction X in Figs. 12 and 13).

In the embodiments of Figs. 12 and 13, the first and second spacer portions are arranged in parallel as seen in the cross-section parallel to the thickness direction Z.

Fig. 14 shows a schematic cross-sectional view XIV-XIV of Fig. 13.

The upper part of Fig. 14 forms an embodiment of a spacer arrangement 24" and shows a checkered configuration Axy, where the first and second spacer portions P1, P2 are arranged in a checkered pattern.

The lower part of Fig. 14 shows a spacer arrangement 24‴ in a line configuration Ax along alternating lines. In the lower part of Fig. 14, the first and second spacer portions P1, P2 are each arranged in line patterns along lines parallel to a Y-direction, wherein lines with first spacer portions P1 are arranged alternatingly with lines on which second spacer portions P2 are arranged.

Fig. 15 shows another embodiment of a barrier 16^{IV} with a spacer arrangement 24^{IV}, which forms a combination of the embodiments of Figs. 12 and 13, wherein alternating patterns of first and second spacer portions P1, P2 form first spacers 28 on one side of an intermediate plate 26, and wherein first and second spacer portions P1, P2 form second spacers 30 in a corresponding configuration on the opposite side of the intermediate plate.

The first spacers 28 and the second spacers 30 are arranged in a complimentary manner so that a first spacer portion P1 is aligned in the thickness direction Z with a second spacer portion P2, and vice versa.

Each of the embodiments of Figs. 12 to 15 can be realized such that different deformation characteristics are provided by the first and second spacer portions, as is shown by way of an example in Fig. 16.

Fig. 17 shows an embodiment where a second plurality of deformable spacer portions P2 are interconnected so as to form a web-like layer, which in Fig. 17 is realized as a honeycomb pattern HA.

The cells of the web-like layer have a thickness t3 (P2).

On top of some of the cells of the web-like layer, which is formed by the second spacer portions P2, respective first spacer portions P1 are provided. Thereby, the combination of the second deformable spacer portions P2 and the first deformable spacer portions P1 have a combined thickness t3 which is larger than the thickness t3 (P2) of the web-like layer.

In this embodiment, the first spacer portions P1 and the second spacer portions P2 are arranged serially/stacked in the thickness direction Z. In this embodiment, the combination of first and second spacer portions, where the thickness is t3, form spacer portions which contact a corresponding opposing surface, while those parts of the web-like layer formed by only the second spacer portions P2 (where the thickness is t3 (P2)) are initially not contacted by the respective opposing surface.

The web-like layer of the embodiment of Fig. 17 may be in general identical to the one described with respect to Figs. 8 to 11 above.

The difference here is that the first spacer portions P1 are provided on parts of the web-like layer, so that spacer portions with different deformation characteristics are formed. A different way of seeing this embodiment is that those parts of the web-like layer on top of which some additional deformable material is provided, form first deformable spacer portions P1 having the thickness t3 which is larger than the thickness t3 (P2) of the web-like layer which is formed by the second spacer portions P2.

In the following, embodiments are described which correspond with respect to layout and function to the embodiment of Fig. 17. Same elements are therefore designated by same reference numerals. In the following, essentially the differences will be explained.

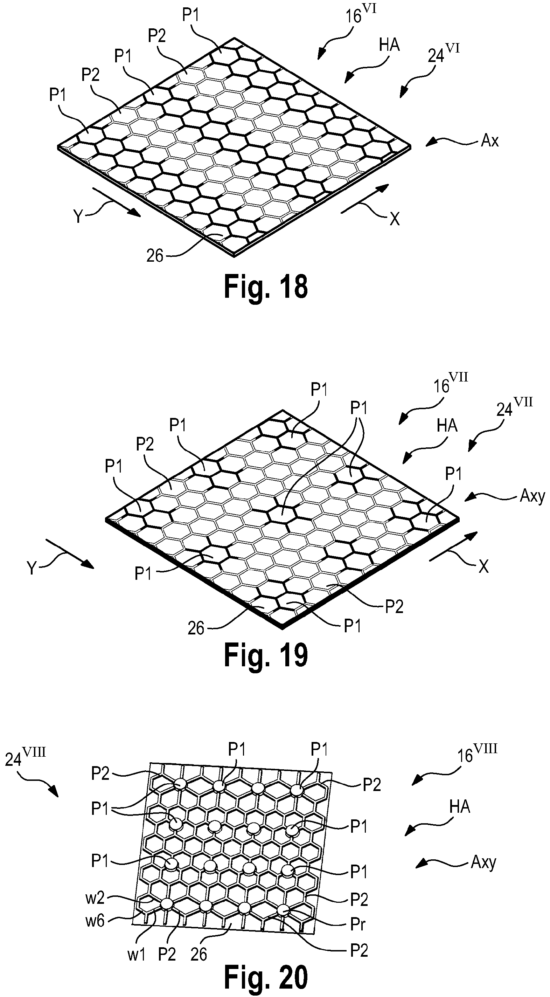

Fig. 18 shows an embodiment of a barrier 16^{VI} with a spacer arrangement 24^{VI}, wherein first and second spacer portions P1, P2 are arranged in a line configuration Ax. In this embodiment, the first spacer portions P1 and the second spacer portions P2 are arranged along alternating lines, as in the embodiment of Fig. 17, the first spacer portions P1 are formed by portions of the web-like layer on which additional deformable material is arranged so as to achieve an increased thickness t3.

Fig. 19 shows an alternative embodiment in which the spacer portions P1, P2 are distributed in the area orthogonal to the thickness direction Z in a checkered configuration Axy.

Fig. 20 shows another embodiment where the first plurality of spacer portions P1 are each formed by a singular protrusion Pr projecting from at least one of the surfaces of the web-like layer formed by the second spacer portions P2.

The singular protrusions Pr may have a circular cross-section when viewed in the thickness direction. Further, the singular protrusions may in each case be located at connections of cell sides of at least two adjacent cells of the web-like layer. The singular protrusions protrude from the upper surface of the web-like layer.

When viewed in the thickness direction, the area of each of the protrusions is smaller than the area of each of the cells of the web-like layer.

In each of the embodiments of Figs. 18 to 20, second spacer portions forming a web-like layer and first spacer portions P1 are formed on one side of an intermediate plate 26. A similar or an identical arrangement may be located on the opposite side of the intermediate plate 26 in each of the above cases, as is schematically indicated in Fig. 17 where a second spacer portion P2 is arranged on the lower side of the intermediate plate 26.

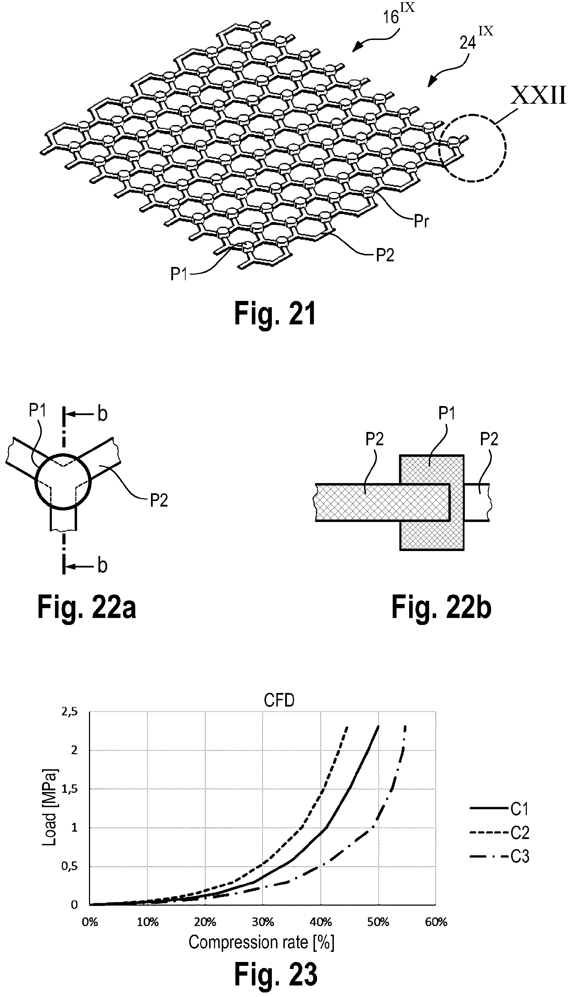

In Figs. 21, 22a, 22b, another embodiment of a barrier 16^{IX} with a spacer arrangement 24^{IX} is shown.

The spacer arrangement 24^{IX} includes a plurality of second deformable spacer portions P2 forming a web-like layer as in the above embodiments. However, the web-like layer is not arranged on an intermediate plate 26. Rather, the spacer arrangement 24^{IX} can be arranged directly between opposing surfaces 21, 23 as shown in the above embodiments.

A plurality of first deformable spacer portions P1 is formed as singular protrusions Pr projecting from at least one of the surfaces of the web-like layer, similar to the embodiment of Fig. 20. However, as is shown in Fig. 22b, the first spacer portions P1 may be arranged on both sides of the web-like layer formed by the second spacer portions P2.

Fig. 23 shows another embodiment of a diagram CFD of compression (load in MPa) vs. compression rate (in %), wherein the first deformation characteristic C1 of a first plurality of deformable spacer portions P1 and the second characteristic C2 of a second plurality of deformable spacer portions P2 are shown, which combine into a combined deformation characteristic C3.

It can be seen that the maximum combined compression rate is configured to be larger than 50 % and smaller than 60 % in this preferred embodiment, wherein the maximum value of the compression rates C1, C2 is smaller than 50 %.

The following Clauses define embodiments of the present disclosure, which may be combined with any of the above embodiments and/or with any of the appended claims:
Clause 1. Thermal barrier for a battery apparatus (10) configured to prevent or delay thermal propagation between battery pack subassemblies, the thermal barrier comprising:
   - a spacer arrangement (24) with at least one intermediate plate having a first surface and a second surface opposite the first surface, a first plurality of spacers extending from the first surface and a second plurality of spacers extending from the second surface,
   - a first and a second barrier plate (20, 22), the spacer arrangement extending between the first and second barrier plates, wherein the first and second barrier plate each comprise an internal surface facing the spacer arrangement and an external surface, opposite the internal surface.
Clause 2. Thermal barrier according to Clause 1, wherein the intermediate plate is made of mica or fibreglass material.
Clause 3. Thermal barrier according to Clause 1 or 2, wherein the first plurality of spacers and/or the second plurality of spacers is made of silicon or Polyurethane material.
Clause 4. Thermal barrier according to any of Clauses 1 to 3, wherein the first plurality of spacers forms a honeycomb pattern and/or the second plurality of spacers forms a honeycomb pattern.
Clause 5. Thermal barrier according to any of Clauses 1 to 4, wherein the intermediate plate comprises through holes such that the first plurality of spacers is connected to the second plurality of spacers.
Clause 6. Thermal barrier according to any of Clauses 1 to 5, wherein the first plurality of spacers defines a first plurality of air gap between the intermediate plate and the first barrier plate, and wherein the second plurality of spacers defines a second plurality of air gap between the intermediate plate and the second barrier plate.
Clause 7. Thermal barrier (16) according to any of Clauses 1 to 6, comprising up to 10 intermediate plates, and wherein a plurality of spacers extends between two adjacent intermediate plates.
Clause 8. Thermal barrier according to any of Clauses 1 to 7 comprising three intermediate plates, a plurality of spacers extending between two adjacent intermediate plates.
Clause 9. Thermal barrier according to any of Clauses 1 to 6, wherein the spacer arrangement comprises a first intermediate plate, a second intermediate plate and a third intermediate plate, wherein the first plurality of spacers extends between the first intermediate plate and the first barrier plate, wherein the second plurality of spacers extends between the first intermediate plate and the second intermediate plate, wherein a third plurality of spacers extends between the second and the third intermediate plate, and wherein a fourth plurality of spacers extends between the third intermediate plate and the second barrier plate.
Clause 10. Thermal barrier according to Clause 9, wherein the first intermediate plate comprises at least one through hole, and the first plurality of spacers communicates with the second plurality of spacers and/or wherein the third intermediate plate comprises at least one through hole, and the third plurality of spacers communicates with the fourth plurality of spacers.
Clause 11. Thermal barrier according to Clause 9 or 10, wherein the second intermediate plate is made in a material different than the first and second barrier plates and/or the second intermediate plate is made in a material different than the first and third intermediate plates.
Clause 12. Thermal barrier according to any of Clauses 1 to 11, wherein the first and/or the second barrier plate and/ or the intermediate plate is between 100 and 500 µm thick.
Clause 13. Thermal barrier according to any of Clauses 1 to 12, wherein each spacer is between 0.3 and 4.6 mm thick.
Clause 14. Thermal barrier according to any of Clauses 1 to 13, wherein the spacers (S) are thicker than the first and/or the second barrier plate and/ or the intermediate plate.
Clause 15. Thermal barrier according to any of Clauses 1 to 14, wherein the first plurality of spacers extends on the first surface of the intermediate plate on an area which represents between 10 and 30 % of the total area of the first surface of the intermediate plate.

Although specific examples have been illustrated and described herein, a variety of alternate and/or equivalent implementations may be substituted for the specific examples shown and described without departing from the scope of the present disclosure. This application is intended to cover any adaptations or variations of the specific examples discussed herein.

### Reference numerals

10 battery sub-assembly
12 first battery cell
14 second battery cell
16 thermal barrier
18 bottom plate
20 first barrier plate
21 internal surface of 20
22 second barrier plate
23 internal surface of 22
24 spacer arrangement
26, 26', 26", 261, 261', 262, 262', 263, 263' intermediate plate
S, 28, 28', 28", 30, 30', 30" 281, 281', 282, 282', 283, 283', 284, 284' plurality of spacers
G gap
H hole
w1, w2, w3, w4, w5, w6 cell sides w1, w2, w3, w4, w5, w6
t1 spacer arrangement thickness
t2 intermediate plates thickness
t3 spacers thickness
B1, B2 spacer base
T1, T2 spacer top
A angle at which the sides of the spacers taper
HA honeycomb arrangement
D distance between barrier plates
D0 initial distance
D1 intermediate distance
D_{MIN} minimum distance
P1 first plurality of spacer portions
P2 second plurality of spacer portions
C1 first deformation characteristic
C2 second deformation characteristic
C combined deformation characteristic
X first direction
Y second direction
Z third (thickness) direction
Axy checkered configuration
Ax line configuration
Pr protrusions

## Claims

1. A barrier (16) for thermal isolation and for preventing or delaying thermal propagation between battery pack subassemblies (10) and/or for accommodating volume changes of battery pack subassemblies, having at least one spacer arrangement (24) configured to be arranged between two opposing surfaces (21, 23) in a thickness direction and comprising
-- a first plurality of deformable spacer portions (P1) which are configured to extend between the opposing surfaces (21, 23) and provide a first deformation characteristic when the opposing surfaces (21, 23) are moved towards each other, and
-- a second plurality of deformable spacer portions (P2) which are configured to extend between the opposing surfaces (21, 23) and provide a second deformation characteristic when the opposing surfaces (21, 23) are moved towards each other, wherein the second deformation characteristic is different from the first deformation characteristic.

2. The barrier according to claim 1, wherein the barrier (16) comprises a first barrier plate (20) and a second barrier plate (22), wherein the first and second barrier plates (20,22) comprise respective internal surfaces (21, 23) which face to each other, and external surfaces, opposite the respective internal surfaces (21, 23),
wherein it is preferred if the internal surfaces (21, 23) form the opposing surfaces between which the first and second pluralities of deformable spacer portions (P1, P2) are configured to extend.

3. The barrier of claim 1 or 2, wherein the spacer arrangement (24) comprises at least one intermediate plate (26) having a first intermediate plate surface which is configured to face one (21) of the opposing surfaces, and a second intermediate plate surface which is configured to face the other (23) of the opposing surfaces, wherein at least one of the first and second pluralities of spacer portions (P1, P2) is arranged at the intermediate plate (26),
wherein it is preferred if at least one of the first and second pluralities of spacer portions (P1, P2) includes first spacers (28) extending from the first intermediate plate surface, and wherein at least one of the first and second pluralities of spacer portions (P1, P2) includes second spacers (30) extending from the second intermediate plate surface.

4. The barrier of anyone of claims 1 to 3, wherein
- at least one of the first and second barrier plates (20, 22) is made of mica or fibreglass material; and/or
- the at least one intermediate plate (26) is made of mica or fibreglass material, and/or
- the first plurality of spacer portions (P1) and/or the second plurality of spacer portions (P2) includes silicone or polyurethane material.

5. The barrier of any one of claims 1 to 4, wherein the first deformation characteristic and the second deformation characteristic differ from each other on account of
- different hardnesses of the first and second pluralities of spacer portions (P1, P2); and/or
- different thicknesses of the first and second pluralities of spacer portions (P1, P2); and/or
- different areas of the first and second pluralities of spacer portions (P1, P2), as seen in a cross-section perpendicular to the thickness direction; and/or
- different areas of the first and second pluralities of spacer portions (P1, P2), as seen in a cross-section parallel to the thickness direction; and/or
- different shapes of the first and second pluralities of spacer portions (P1, P2), as seen in a cross-section perpendicular to the thickness direction; and/or
- different shapes of the first and second pluralities of spacer portions (P1, P2), as seen in a cross-section parallel to the thickness direction.

6. The barrier of any one of claims 3 to 5, wherein the first spacers (28) extending from the first intermediate plate side of the intermediate plate (26) and/or the second spacers (30) extending from the second intermediate plate side of the intermediate plate (26) includes a web pattern, particularly a honeycomb pattern.

7. The barrier according to any of claims 3 to 6, wherein the intermediate plate (26) comprises through holes (H) through which the first spacers (28) are connected to the second spacers (30).

8. The barrier according to claim 6 or 7, wherein at least some of the holes (H) in the intermediate plate (26) are located at connections of cell sides (w1, w2, w3, w4, w5, w6) of at least two adjacent cells of the web pattern.

9. The barrier according any of claims 1 to 8, wherein at least one of the first plurality of deformable spacer portions (P1) and the second plurality of deformable spacer portions (P2) are arranged in an area orthogonal to the thickness direction (z) such that they are distributed
- in a line configuration (Ax) along alternating lines, or
- in a checkered configuration (Axy).

10. The barrier according to any of claims 1 to 9, wherein
- the first plurality of spacer portions (P1, P2) and/or the second plurality of spacer portions (P1, P2) forms a web pattern, particularly a honeycomb pattern.

11. The barrier of claim 10, wherein the second plurality of spacers portions (P2) forms a web pattern, particularly a honeycomb pattern, so as to form a web-like layer, and wherein the first plurality of spacer portions (P1) are distributed over and connected to the web-like layer so as to protrude from at least one surface of the web-like layer,
wherein it is preferred if the first plurality of spacer portions (P1) is connected to the web-like layer in a positively locking manner.

12. The barrier according to claim 11, wherein the first plurality of spacer portions (P1)
- each form a honeycomb pattern which is preferably arranged on top of a portion of at least one of the surfaces of the web-like layer, or
- each form a singular protrusion (Pr) projecting from at least one of the surfaces of the web-like layer.

13. The barrier according to claim 12, wherein the singular protrusions (Pr) are located at connections of cell sides (w1, w2, w3, w4, w5, w6) of at least two adjacent cells of the web-like layer.

14. The barrier according to any one of claims 4 to 13, wherein the cells of the web pattern have identical sizes or have sizes which are adapted to loads which vary over the area of the web pattern.

15. The barrier according to any of claims 2 to 14, wherein the first and/or the second barrier plate (20, 22) and/or the intermediate plate (26) is between 100 and 1000 µm thick.
